# EUROPEAN PATENT APPLICATION

(11) **EP 2 924 984 A1**
(43) Date of publication of application: **30.09.2015**
(21) Application number: 14162020.3
(22) Date of filing: 27.03.2014
(51) Int. Cl.: H04N 7/14, H04L 12/873, H04L 12/853, H04L 12/851, H04L 12/863

(54) **Digital conference system**

(71) Applicant: Televic Conference NV, 8870 Izegem (BE)
(72) Inventor: Melange, Cedric, 8800 Beveren (Roeselare) (BE); Talloen, Patrick, 8450 Bredene (BE); Demuytere, Pieter, 9870 Zulte (BE)
(74) Representative: Van Bladel, Marc

(57) **Abstract**

The present invention relates to a digital conference system comprising a central unit and at least two conference devices. The central unit is connected to the at least two conference devices in a point-to-multipoint topology and the at least two conference devices are connected to the central unit in a multipoint-to-point topology. The digital conference system is arranged for bidirectional data traffic between the central unit and the at least two conference devices. The data traffic is organized in at least two data classes, whereby the data traffic from the central unit towards the at least two conference devices is logically split from data traffic from the at least two conference devices towards the central unit. The central unit and the at least two conference devices comprise multiplexing means adapted for combining data of the at least two data classes. The multiplexing means are arranged for attributing, before transmission, to the at least two data classes a downlink priority level when travelling towards the at least two conference devices and an uplink priority level when travelling towards the central unit.

## Description

### Field of the invention

The present invention is generally related to the field of digital conference systems comprising a central unit and a plurality of conference devices like delegate units, extension units, interpreter units, ... connectable to the central unit.

### Background of the invention

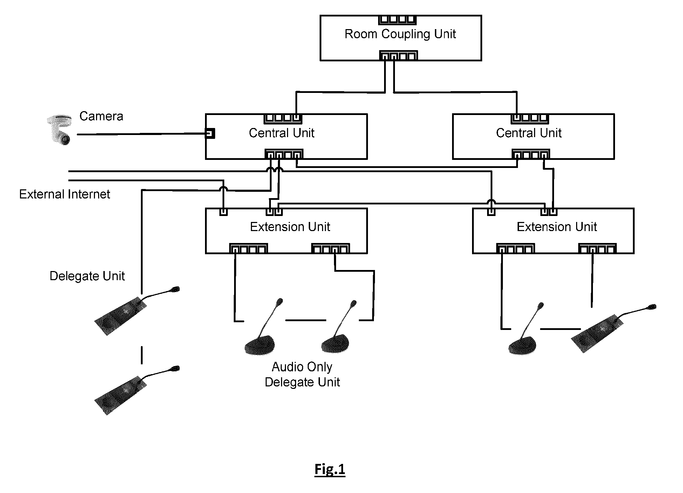

A digital conference system includes a central unit, which is via powered network ports in connection with several delegate units for the participating delegates. Apart from the delegate units several other types of conference devices can be present in a digital conference system : video units, channel selectors, extension units and interpreter units. Any of them can be connected to the central unit via a network port. The central unit comprises a number of conference network ports to which various devices of the conference network can be coupled, like e.g. delegate units, video units, channel selectors, extension units, legacy unit and interpreter units. Fig.1 illustrates a typical network topology for a digital conference system as known in the art.

Delegate units are provided for the conference participants. This equipment typically provides discussion, voting, video and interactivity functionality towards the delegate. Various flavours of this device occur in practice (e.g. offering a subset of these functions towards the conference participant (for example, an audio-only device)). Video units may be needed to interface various kinds of video equipment, such as e.g. cameras, with the conference network. Channel selectors provide selective audio channel receiver functionality towards a conference attendee. Extension units allow increasing the number of units that can be connected to the network, as there is a limitation to the maximum number of units which can be incorporated in one branch (power supply, bandwidth). Interpreter units are devices that allow interpreters to simultaneously listen to a specific audio channel in the network and to insert the translated version of this channel (language) in the conference network.

The conference network is basically a combination of point-to-multipoint (central unit to delegate units) connection and multipoint-to-point connections (delegate units, interpreter units etc... to the central unit). All communication in the network goes via the central unit, which orchestrates the full network behaviour.

Patent application WO2005/101755 provides a method for transmitting data from various data sources across data packet data communications network having a congestion control mechanism for reducing the effects of congestion by selectively prioritising data packets. The data packets can contain data in a number of different multimedia types, e.g. voice, video, audio, email, each being within a separate partition in the packet. The packets can be transmitted as a train of data packets with some association in time and an order of precedence. The association and order of precedence are used to decide which packets can be kept and which packets can be discarded when network congestion occurs.

US2007/083666 is concerned with bandwidth management in transmitting multimedia over a network. An audio, video and data stream is created, each having their own rate, determined independently of the others. They are collectively transmitted according to a priority hierarchy that gives precedence of the audio stream over the video stream and data stream, and gives precedence of the data stream over the video stream.

There is a need for a distributed intelligent conference system which allows guaranteeing correct performance levels for various data streams in the network. Mission critical data needs to be guaranteed to be delivered all the time, while other data potentially can be discarded without huge impact on the over-all system behaviour.

### Summary of the invention

It is an object of embodiments of the present invention to provide for a digital conference system wherein various data streams can be combined in a scalable way and wherein Quality-of-Service can be optimized and/or guaranteed for specific data streams. The invention also aims to provide a digital conference system with a central unit capable of performing a centralized management of the total bandwidth consumption and the type of bandwidth consumption in the conference network.

The above objective is accomplished by the solution according to the present invention.

In a first aspect the invention relates to a digital conference system comprising a central unit and at least two other conference devices. The central unit is connected to the at least two conference devices in a point-to-multipoint topology and the at least two conference devices are connected to the central unit in a multipoint-to-point topology. The digital conference system is arranged for bidirectional data traffic between the central unit and the at least two conference devices. The data traffic in each direction is organized in at least two data classes, whereby the data traffic from the central unit towards the at least two conference devices (downlink data traffic) is logically split from data traffic from the at least two conference devices towards the central unit (uplink data traffic). The central unit and the at least two conference devices comprise multiplexing means adapted for combining data of the at least two data classes in each direction. The digital conference system is characterized in that the multiplexing means are arranged for attributing, before transmission, to the at least two data classes a downlink priority level when travelling towards the at least two conference devices and an uplink priority level when travelling towards the central unit. As such, priorities levels can be assigned in an optimized way.

The proposed solution indeed allows for combining data of various data classes in a scalable way. Due to the dedicated priority level for each type of data class, and this for upstream and downstream direction separately, a multitude of options are available to compose the resulting stream to be transmitted. These options are typically fixed in the design, but also during deployment tuning is allowed (using software/firmware update techniques).

In a preferred embodiment at least the central unit comprises at least two ports for receiving and transmitting the data traffic and a processing means arranged for detecting the rate of the data traffic at the ports, as such allowing optimal bandwidth usage in the network. Advantageously, the processing means is arranged for detecting whether the data traffic travels in uplink or downlink direction, which allows simple network installation.

In an embodiment at least one of the at least two conference devices is an extension unit arranged for connecting various equipment such as delegate units and/or interpreter units.

In a preferred embodiment the multiplexing means is arranged for combining data of the at least two data classes into a first and a second stream, said first stream comprising audio data and the second stream having a larger bandwidth than the first stream. Each of the at least two ports is preferably equipped with storage means for storing the first and the second stream. The multiplexing means are advantageously arranged for combining the first and second stream stored in the storage means. As such, dedicated units (e.g. equipped with lower-bandwidth network ports) can be connected to the specific port which handles the lower bandwidth stream (lower cost equipment).

In a preferred embodiment the first stream further comprises control data.

Advantageously, the central unit comprises a control unit arranged for controlling and managing the bandwidth of the first and second data stream. In one embodiment the control unit is arranged for assigning a guaranteed Quality-of-Service level to the first and said second stream.

In a preferred embodiment at least a first conference device of the at least two conferences devices is connected with a plurality of further conference devices.

In another preferred embodiment the multiplexing means of at least one of the at least two conference devices is arranged for performing rate control of incoming data traffic and of internal data traffic in the at least one conference device.

In another preferred embodiment of the invention the digital conference system comprising a plurality of conference devices is provided with a central unit arranged for being connected to at least two conference devices of that plurality in a point-to-multipoint topology and for transmitting and receiving data traffic organized in at least two data classes. The central unit comprises :
- first multiplexing means for combining data of the at least two data classes into a first and a second stream, said first stream comprising audio data and said second stream having a larger bandwidth than the first stream,
- a plurality of ports for connecting the at least two conference devices, each of the ports equipped with storage means for storing the first and the second stream and transmitter means for forwarding at least the first stream, whereby each of the ports is further adapted for detecting an indication of the bandwidth of the link via which one of the at least two conference devices is connected to the central unit and with second multiplexing means for combining the first and second stream stored in the storage means, and
- a control unit arranged for controlling and managing the bandwidth of the first and second data stream.

In a preferred embodiment at least the first multiplexing means of the central unit are adapted for attributing downlink priority levels to the at least two data classes before transmission.

In another embodiment an upper limit is set in the central unit to the bandwidth of the second stream. The first stream preferably has a bandwidth of 100 Mbps and the second stream a bandwidth of 1 Gbps.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 illustrates a general scheme of a digital conference system and its main components.

Fig.2 illustrates downstream routes of the data on the conference network and the way they are combined/multiplexed/de-multiplexed.

Fig.3 illustrates upstream routes of the data on the conference network and the way they are combined/multiplexed/de-multiplexed.

Fig.4 illustrates data classes that typically occur over a conference network.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the description below the downstream link is defined as the direction from the central unit towards the delegate units, interpreter units, etc... , while the upstream traffic travels in the opposite direction.

The present invention proposes a digital conference system comprising a number of novel features. First, both downstream and upstream data traffic is organized in data classes which get from priority multiplexers in the various parts of the conference system a separate priority level for downstream and upstream. The priority multiplexers in the components of the conference system next combine data of the various data classes taking into account the attributed priority levels. As such, the combination of data streams of different classes (such as control, data, audio, video, interactivity) in the high performance conferencing system is achieved in fully scalable way. As opposed to current state-of-the-art solutions, in a digital conference system according to the invention all of these multimedia streams can be combined in a fully integrated way, i.e. different user experiences can be combined in one network with the required level of performance. Secondly, the central unit (CU) is capable of centrally managing the bandwidth consumed in the conference network. Application specific Quality-of-Service requirements (such as latency, responsivity, ...) are thereby taken into account. More details on these features are provided below.

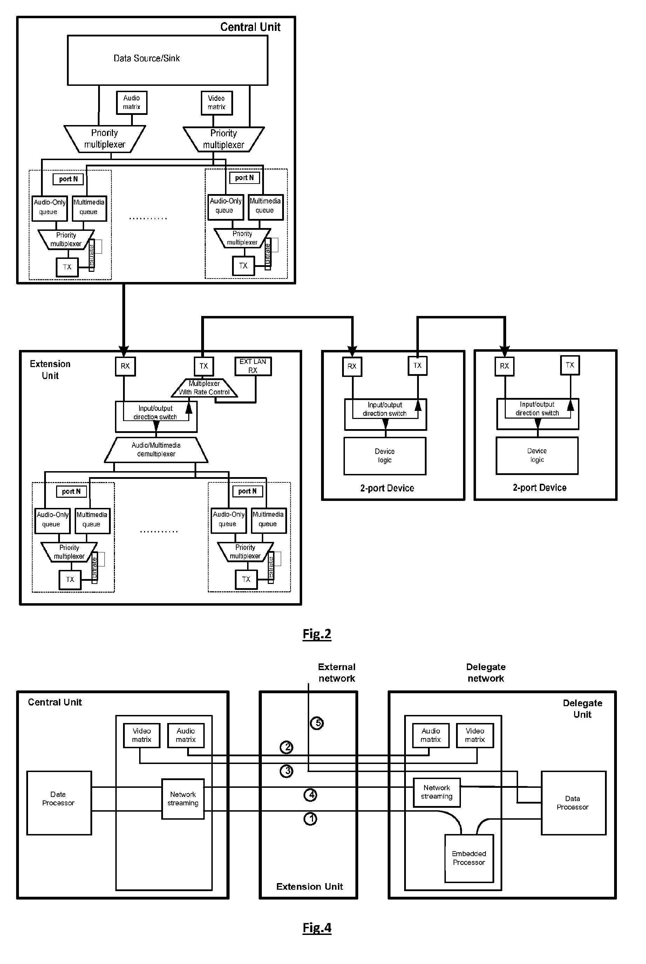

In the downstream direction (the CU is the source) (Fig.1) the conference network has a point to multipoint (P2MP) structure. The downstream forwarding of data is rather straightforward. All packets sent by the CU are received by all conference devices, according to their capabilities. The central unit is the single point where the bandwidth can and needs to be controlled. The total bandwidth typically has an upper limit (as determined by the physical limitations of the network, e.g. smaller than 1 Gbps). Another example where bandwidth control is of special interest, is the accommodation towards price-sensitive audio-only devices. To limit the cost of network ports (e.g. limited to 100 Mbps ports), one can control in the CU that the combined bandwidth of audio and control data do not exceed this predefined amount. Different routes for the downstream traffic are schematically depicted in Fig.2. Various daisy chain topologies are allowed (including loops and nested loops e.g. to provide redundancy in case of malfunctioning of certain network parts). A Minimum Spanning Tree algorithm is implemented to guarantee optimal data transfer load in the network.

At the central unit all available data classes intended to be transmitted downstream are combined into dedicated streams by means of priority multiplexers. As an example, the first stream contains the classes required for the operation of audio only devices: audio and control packets. The bandwidth of this first stream should be limited to a rate depending on the audio-only device. A typical value is e.g. 100 Mbps. The second stream contains all multimedia related traffic: video and IP packets. This second stream fills up the bandwidth that has not been allocated to the audio only stream, to the maximum available bandwidth (e.g. 1 Gbps).

Next the two streams are copied in a separate queue per output port. This is needed to accommodate dual rate output ports at the central unit (and, optionally, one or more extension units). When a 100 Mbps link is detected by the transmitter, data solely from the audio only queue is transmitted. In the other case, when the output port is connected with a 1 Gbps capable device, both streams are combined with a priority multiplexer, before being transmitted. The downstream ports of an extension unit operate the same as the output ports in the central unit. Only in the extension units a multiplexer is added in front of the output section, in order to separate the audio-only data classes from the other classes.

The 2-port upstream section of the extension unit behaves exactly like a regular 2-port device (e.g. delegate units, interpreter units, ...). One of the two ports is always selected as input port by the spanning tree algorithm, the other then is the output port. Data received from the input port is copied twice: once to the internal device logic and once directly to the output port to forward to other devices more downstream in the daisy chain. Consequently, in downstream, each device receives an exact copy of the stream that was generated at the central unit, with the constraint that devices with limited data rate capability (e.g. 100 Mbps) will only receive audio and control packets.

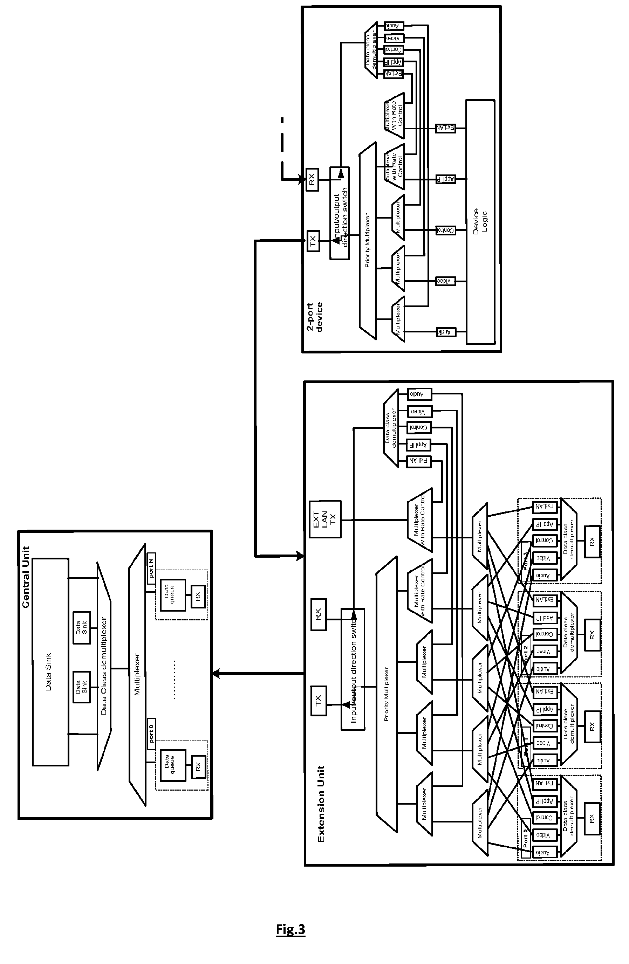

In the upstream direction, whereby the central unit is the destination, the conference network has a multipoint-to-point topology (MP2P). Consequently, at every node in the conference network, devices have to merge their own upstream traffic with the upstream data from devices located further downstream in the daisy chain. One should also realize that inside the network, typically only the bandwidth of the audio and video information is known, because it is the central unit that grants permission to the sources to send their data. On the other hand, devices can send control packets and generate IP traffic at any given moment, since this traffic is generated by the user and user interaction is asynchronous. This makes the upstream data transmission more complex and challenging than the downstream link described earlier. The different routes and manipulations of the upstream traffic are schematically depicted in Fig.3.

The internal network streaming data bus in the central unit (CU) has a throughput adapted to accommodate the maximum upstream traffic from the various conference network ports, which can therefore simply be multiplexed with a standard round robin multiplexer. Afterwards the packets are filtered based on their data class (conference network port number).

In upstream direction, the various units (extension units, delegate units, ..) comprise a complex logic for handling the upstream data combining and forwarding.

Before merging the internal traffic (coming from downstream ports in case of an extension unit, generated by device logic in a pure 2-port device) with the upstream data stream that is travelling from further downstream in the daisy chain towards the central unit, the information needs to be split up into its multiple data class components. This is necessary in order to prevent that low priority classes in one stream would supersede high priority classes from a stream added during the multiplexing. The streams are thus first multiplexed per data class. Only afterwards the different merged data classes are multiplexed to the desired output stream according to their relative priority.

As an example on the usage of rate control, one additional measure is added in the multiplexing of 'Application IP' and 'external LAN' packets to increase the fairness of bandwidth availability over all nodes in a single branch. Indeed, if a regular multiplexer with round robin scheme were used, every node would occupy half the available bandwidth at the expense of the traffic originated further downstream, which would favour the node closest to the CU. Therefore the multiplexers that handle the 'Application IP' and 'LAN' packets comprise a rate control mechanism that limits the bandwidth of the internal traffic to 1/10 (2-port devices) or 1/4 (extension units) of the total available bandwidth for that particular class. In case the other part of the bandwidth would not be completely utilized, the rate controlled multiplexer can temporarily ignore the bandwidth limitation and completely fill up the remaining bandwidth.

Also in the downstream section of an extension unit, the received data is immediately split up in its multiple classes. Next, the data packets of the downstream ports are merged per data class with a standard multiplexer with round robin service scheme, yielding a fair bandwidth distribution over all ports. Finally these merged data classes are further mixed with the upstream data stream in the input section as described above.

In Fig.3 the upstream data combining and forwarding is illustrated for Gbps capable devices. For audio only devices that solely support a much more limited data rates (for example, 100 Mbps), the same approach can be adopted, except that the streams are split up in only two data classes ('Audio' and 'Control') as the other three are not present in a link of limited bandwidth.

A schematic overview of several data classes that typically run over the conference network is given in Fig.4. Note that this picture does not intend to contain detailed routing information of the different streams, but merely shows the communication paths between the different components of the system. Obviously, more complicated schemes can be implemented.

### 1. Control

This stream contains the information needed to control and manage the conference system. This includes packets related to initialization, configuration, update, microphone management, redundancy, device status. This information stream has guaranteed QoS in the downstream direction (away from the central unit), thanks to a priority scheme and bandwidth control at the central unit side. In the upstream direction (towards the central unit) the quality level is best effort.

### 2. Audio

This stream contains the audio channels embedded in conference data packets. This stream always has guaranteed QoS, thanks to bandwidth control and a priority scheme. There is one exceptional packet that is also considered as an Audio class member: the 'Negative Acknowledgement' for control packets. The reason is that these packets also require highest priority in the upstream direction.

### 3. Video

This stream contains all the video channels embedded in data packets. Equivalent to the audio link, this stream always has guaranteed QoS, thanks to bandwidth control and a priority scheme.

### 4. Application IP

The fourth data exchange path carries all data related to the interactive functions on the touch screens in case of a multimedia delegate unit. This stream has a best effort quality level, as only the bandwidth not occupied by the first three classes, is filled with this type of packets.

### 5. External LAN

Another class of data that can be sent over the conference network is the external LAN traffic. This embraces both traffic from/to external devices (e.g. delegate laptops) and information exchange between interactive delegates and external sources (e.g. web browsing). This stream has a best effort quality level and has the lowest priority. Bandwidth that is not used for any of the above types of data, can be filled with external LAN packets.

The table below enumerates the priority levels for the different data classes in the conference network. Level 1 corresponds to the highest priority

| **Priority Level** | **Downstream** | **Upstream** |
|---|---|---|
| **1** | Control | Audio |
| **2** | Audio | Video |
| **3** | Video | Control |
| **4** | Application IP | Application IP |
| **5** | External LAN | External LAN |

The relative position of the Control class is different for the downstream (from the central unit) and upstream (to the central unit) direction. Downstream, control packets have the highest priority in order to minimize their latency and increase the responsiveness of the system to control commands (initialization, update, ...). As also audio and video need guaranteed QoS, the rate of the control packets has to be limited at the central unit side.

In the upstream direction the situation is different because the aggregated momentary bandwidth can no longer be controlled from a central point, due to the asynchronous nature of the packets combined with a multipoint-to-point topology of the network. To avoid a possible impact on the QoS of Audio and Video in the upstream direction, the control packets have a priority level of 3. There is one exception: the 'Hello neighbor' packets used in the spanning tree building. These packets always have the highest priority (level 0). The bandwidth occupied by these frames is very limited and they are not forwarded to the central unit, meaning that bandwidth is never aggregated.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Digital conference system comprising a central unit (CU) and at least two conference devices, said central unit being connected to said at least two conference devices in a point-to-multipoint topology and said at least two conference devices being connected to said central unit in a multipoint-to-point topology, said digital conference system arranged for bidirectional data traffic between said central unit and said at least two conference devices, said data traffic in each direction organized in at least two data classes, said data traffic from said central unit towards said at least two conference devices being logically split from data traffic from said at least two conference devices towards said central unit, said central unit and said at least two conference devices comprising multiplexing means adapted for combining data of said at least two data classes,
**characterised by** said multiplexing means being arranged for attributing, before transmission, to said at least two data classes a downlink priority level when travelling towards said at least two conference devices and an uplink priority level when travelling towards said central unit.

2. Digital conference system as in claim 1, wherein at least said central unit comprises at least two ports for receiving and transmitting said data traffic and comprises a processing means arranged for detecting the rate of said data traffic at said ports.

3. Digital conference system as in claim 2, wherein said processing means is arranged for detecting whether said data traffic travels in uplink or downlink direction.

4. Digital conference system as in claim 1, wherein at least one of said at least two conference devices is an extension unit arranged for connecting a plurality of delegate units and/or interpreter units.

5. Digital conference system as in any of the previous claims, wherein said multiplexing means is arranged for combining data of said at least two data classes into a first and a second stream, said first stream comprising audio data and said second stream having a larger bandwidth than said first stream.

6. Digital conference system as in claim 5, wherein each of said at least two ports is equipped with storage means for storing said first and said second stream.

7. Digital conference system as in claim 6, wherein said multiplexing means are arranged for combining and/or spreading said first and second stream stored in said storage means.

8. Digital conference system as in any of claim 5 to 7, wherein said first stream further comprises control data.

9. Digital conference system as in any of claims 5 to 8, wherein said central unit comprises a control unit arranged for controlling and managing the bandwidth of said first and second data stream.

10. Digital conference system as in claim 9, wherein said control unit is arranged for assigning a reserved amount of bandwidth to at least one of said data classes.

11. Digital conference system as in any of the previous claims, wherein at least a first conference device of said at least two conferences devices is connected with a plurality of further conference devices.

12. Digital conference system as in any of the previous claims, wherein said multiplexing means of at least one of said at least two conference devices is arranged for performing rate control of incoming data traffic and of internal data traffic in said at least one conference device.

13. Digital conference system as in any of the previous claims, wherein said central unit is arranged for being connected to at least two conference devices in a point-to-multipoint topology and for transmitting and receiving data traffic organized in at least two data classes, said central unit comprising :
- first multiplexing means for combining data of said at least two data classes into a first and a second stream, said first stream comprising audio data and said second stream having a larger bandwidth than said first stream,
- a plurality of ports for connecting said at least two conference devices, each of said ports equipped with storage means for storing said first and said second stream and transmitter means for forwarding at least said first stream, whereby each of said ports is further adapted for detecting an indication of the bandwidth of a link via which one of said at least two conference devices is connected to said central unit and with second multiplexing means for combining said first and second stream stored in said storage means, and
- a control unit arranged for bandwidth control and bandwidth management of said first and second data stream.
